# FASCICULE DE BREVET EUROPEEN

(11) **EP 4 436 843 B1**
(45) Date de publication et mention de la délivrance du brevet: **12.11.2025**
(21) Numéro de dépôt: 22821499.5
(22) Date de dépôt: 23.11.2022
(51) Int. Cl.: B60T 13/66, B60T 13/74

(54) **PROCÉDÉ DE COMMANDE ÉLECTRIQUE D'UN FREIN DE PARKING**
VERFAHREN ZUR ELEKTRISCHEN STEUERUNG EINER PARKBREMSE
PARKING BRAKE ELECTRIC CONTROL METHOD

(30) Priorité: 24.11.2021 FR 2112456
(43) Date de publication de la demande: 02.10.2024
(73) Titulaire: Astemo France, 93700 Drancy (FR)
(72) Inventeur: DACLAT, Julien, 77127 LIEUSAINT (FR)
(74) Mandataire: LLR
(86) Numéro de dépôt international: PCT/EP2022/082905
(87) Numéro de publication internationale: WO 2023/094417

(56) Documents cités:
- JP-A- 2001 106 045
- US-A1- 2002 023 818
- US-A1- 2012 191 311
- US-A1- 2015 274 139
- US-A1- 2020 023 825

## Description

L'invention se rapporte à un procédé de commande électrique d'un frein de parking, aussi appelé frein de stationnement, pour véhicule automobile.

On connait de l'art antérieur des freins de type à disque ou à tambour. Un frein comprend en général des moyens de friction reliés à un organe d'actionnement, également appelé actionneur, apte à déplacer les moyens de friction en direction d'un organe de freinage fixé à une roue du véhicule. Cela a pour but de mettre les moyens de frictions, par exemple des garnitures ou plaquettes de frein, en contact avec l'organe de freinage pour freiner le véhicule par friction ou de les écarter de l'organe de freinage dans le but de cesser le freinage. Lorsque le système de freinage est un frein à disque, l'organe de freinage est formé par un disque solidaire en rotation de la roue. Dans le cas d'un frein à tambour, l'organe de freinage est formé par un tambour solidaire en rotation de la roue.

Un même frein peut comprendre plusieurs actionneurs. Par exemple, il peut comprendre un actionneur hydraulique utilisé pour le freinage de service et un actionneur électrique pour les freinages de parking et de secours. Dans ces derniers cas, on parle également de frein de parking à commande électrique ou frein de parking électrique. Le frein de parking électrique est de plus en plus utilisé en remplacement des freins de parking manuel. L'utilisation d'un frein de parking électrique est plus simple pour l'utilisateur du véhicule et présente un encombrement réduit. Lorsqu'un utilisateur souhaite faire quitter son stationnement au véhicule, il lui suffit d'appuyer sur un bouton permettant de desserrer le frein de parking électrique, attendre, le cas échéant, qu'un signal lui indique que le frein de parking électrique a effectivement été desserré, puis accélérer.

Le document JP 2001 106045 A dévoile un procédé de desserrage d'un frein de parking en deux étapes dans lequel la pression sur la pédale de l'accélérateur comporte la annulation complète de l'application du frein de stationnement.

Toutefois, l'utilisation d'un frein de parking électrique présente des inconvénients. Notamment, il arrive parfois que le véhicule subisse une secousse au cours du desserrage du frein de parking électrique. Cette secousse intervient, par exemple, au moment où les moyens de friction quittent l'organe de freinage et arrêtent donc de frotter contre celui-ci, ce qui entraine un léger repositionnement du châssis. Une telle secousse est désagréable pour les occupants du véhicule et est même susceptible de les alarmer inutilement sur un éventuel dysfonctionnement du véhicule.

L'invention a notamment pour but de résoudre ce problème.

À cet effet l'invention a pour objet un procédé de commande électrique d'un frein de parking pour véhicule automobile, caractérisé en ce que l'on commande un desserrage du frein de parking en deux étapes séparées par une interruption du desserrage d'une durée liée à la réalisation d'une condition prédéterminée.

La réalisation d'un desserrage en deux étapes plutôt qu'en une seule étape permet de réduire l'intensité de la secousse ressentie par les occupants du véhicule. En effet, la grosse secousse ressentie lors d'un desserrage en une étape est, grâce au procédé l'invention, divisée en deux secousses de plus faibles intensités qui ne sont pas, ou pratiquement pas, ressentie par les occupants du véhicule. Les occupants du véhicule ne sont donc pas incommodés par ces secousses et ne sont pas non plus alertés sur un éventuel dysfonctionnement du véhicule.

Un desserrage du frein de parking correspond au passage d'un état de serrage, dans lequel les moyens de friction du frein coopèrent avec l'organe de freinage en le serrant pour immobiliser une roue du véhicule, à un état de desserrage dans lequel les moyens de friction et l'organe de freinage sont séparés et n'immobilisent donc plus la roue.

Avantageusement, l'interruption du desserrage du frein de parking est commandée lorsqu'une force de serrage du frein de parking devient inférieure à un seuil de force prédéterminé.

De cette façon, on détermine le moment au cours du desserrage du frein où l'interruption a lieu. Dans un mode de réalisation, le seuil de force prédéterminé est choisi de manière à correspondre au moment où les moyens de friction du frein de parking commencent à se séparer de l'organe de freinage. Ainsi, l'interruption a lieu au moment où la secousse a le plus de chance de se produire avec une intensité élevée ce qui permet d'éviter qu'une grosse secousse soit ressentie par les occupants du véhicule. La valeur du seuil de force prédéterminé varie en fonction de plusieurs paramètres relatifs aux dimensions du véhicule, tels que la hauteur du véhicule et/ou son empattement. Par exemple, dans un mode de réalisation, la valeur du seuil de force prédéterminé correspond à la moitié de la force nécessaire pour immobiliser le véhicule (force nominale). Dans un autre mode de réalisation, la valeur du seuil de force prédéterminé est comprise entre la moitié et un tiers de la valeur de la force nominale. L'interruption provoque une première petite secousse qui n'est pas ou peu perceptible par les occupants du véhicule. Une deuxième petite secousse est éventuellement ressentie lors de la reprise du desserrage.

De manière avantageuse, on commande une reprise du desserrage du frein de parking lorsqu'une pression hydraulique exercée par un actionneur hydraulique d'un frein de service du véhicule devient inférieure à un seuil de pression prédéterminé.

De cette façon, on détermine le moment où la reprise du desserrage a lieu en fonction du retrait du pied du conducteur de la pédale du frein de service. En effet, lors du desserrage du frein de parking, il est fréquent que le conducteur du véhicule appuie simultanément sur la pédale du frein de service afin d'empêcher tout déplacement non souhaité du véhicule. Le frein de service et le frein de parking utilisent, au moins pour les roues arrière, les mêmes moyens de friction et le même organe de freinage, seul l'actionneur diffère. Ainsi, pour que le desserrage du frein de parking ait lieu en provoquant le moins de secousse possible, il est avantageux d'attendre que le conducteur ait commencé à retirer en partie son pied de la pédale de frein de service. Dans un mode de réalisation particulier, le seuil de pression prédéterminé est choisi pour coïncider avec le moment où le freinage devient assez faible pour que le véhicule commence à avancer. De cette façon, la deuxième petite secousse, qui intervient lorsque le desserrage du frein de parking reprend, est confondue avec la mise en mouvement du véhicule et n'est pas du tout ressentie par les occupants du véhicule. Le seuil de pression prédéterminé varie en fonction des caractéristiques du véhicule, notamment son poids. Comme indiqué précédemment, il est préférentiellement choisi pour correspondre à la pression hydraulique à laquelle le véhicule commence à se déplacer. Dans un mode de réalisation, le seuil de pression prédéterminé varie en fonction d'une inclinaison du véhicule. L'inclinaison du véhicule est un facteur qui influence la pression hydraulique pour laquelle le véhicule commence à avancer. La prise en compte de ce facteur permet donc de faire coïncider au mieux la mise en mouvement du véhicule et la reprise du desserrage du frein de parking.

De manière avantageuse, on commande une reprise du desserrage du frein de parking lorsqu'une durée prédéterminée s'est écoulée depuis l'interruption du desserrage du frein de parking.

De cette façon, on détermine simplement le moment où reprend le desserrage du frein de parking tout en ayant divisé la grosse secousse en une première petite secousse qui intervient lors de l'interruption du desserrage et une deuxième petite secousse qui intervient lors de la reprise du desserrage.

Avantageusement, la durée prédéterminée est de 200 ms.

Cette durée est suffisamment longue pour séparer la grosse secousse en deux petites secousses, et suffisamment courte pour éviter que le desserrage du frein de parking ne soit trop long.

Avantageusement, le procédé est mis en œuvre uniquement lorsque des moyens de mesure ou d'estimation d'une pression hydraulique exercée par un actionneur hydraulique d'un frein de service du véhicule détectent que la pression hydraulique est comprise entre 1,5 x 10⁶ et 7,5 x10⁶ Pa.

Il s'agit d'une situation dans laquelle une secousse a de grandes probabilités de se produire.

De manière avantageuse, le procédé est mis en œuvre uniquement lorsque des moyens de mesure ou d'estimation d'une inclinaison du véhicule détectent que le véhicule présente une inclinaison supérieure à 5 % par rapport à une position horizontale

Ainsi, le procédé est mis en œuvre uniquement dans les situations où une secousse de grande amplitude a le plus de chances d'être ressentie, ce qui permet de réaliser des économies d'énergie. Lorsque le véhicule est stationné dans une pente avec une inclinaison supérieure à 5 %, le repositionnement du châssis est plus important lors du desserrage du frein de parking car la répartition du poids du véhicule sur le châssis est modifiée en étant porté sur la partie du véhicule qui est à l'avant de la pente. Ce déséquilibre entraine donc un repositionnement plus important du châssis lors du desserrage du frein de parking. Dans un mode de réalisation, le procédé est mis en œuvre uniquement lorsque des moyens de mesure ou d'estimation d'une inclinaison du véhicule détectent que le véhicule présente une inclinaison supérieure à 15%. Ce sont des inclinaisons qui sont communément rencontrées sur la route et pour lesquelles la secousse lors du desserrage est importante, et donc pour lesquelles le procédé selon l'invention est particulièrement utile. La position horizontale est celle habituelle, c'est-à-dire définie comme étant orthogonale à la force de gravité. Dans un autre mode de réalisation, le procédé est mis en œuvre uniquement lorsque des moyens de mesure ou d'estimation d'une inclinaison du véhicule détectent que le véhicule présente une inclinaison comprise entre 5 % et 30 %, de préférence entre 10 % et 30 %, de préférence encore entre 15 % et 30 %.

Avantageusement, le procédé est mis en œuvre uniquement lorsque les moyens de mesure ou d'estimation d'une inclinaison du véhicule détectent que le véhicule est incliné vers l'avant de façon que la force de gravité a tendance à entrainer le véhicule vers l'avant.

Ainsi, le procédé est mis en œuvre uniquement dans les situations où une secousse de grande amplitude a le plus de chances d'être ressentie, ce qui permet de réaliser des économies d'énergie. En effet, le frein de parking étant généralement situé au niveau des roues arrière du véhicule, c'est dans le cas où le véhicule est incliné vers l'avant de façon que la force de gravité a tendance à entrainer le véhicule vers l'avant que la secousse est la plus fortement ressentie lors du desserrage du frein de parking.

Selon un mode de réalisation, le frein de parking est un frein à tambour. C'est avec ce type de frein que les secousses sont le plus fréquemment et le plus fortement ressenties lors du desserrage du frein de parking.

Selon un autre mode de réalisation, le frein de parking est un frein à disque.

L'invention a également pour objet un véhicule automobile comprenant une unité de contrôle électronique configurée pour mettre en œuvre le procédé tel que décrit précédemment.

### Brève description des figures

L'invention sera mieux comprise à la lecture de la description qui va suivre donnée uniquement à titre d'exemple et faite en se référant aux dessins annexés dans lesquels :

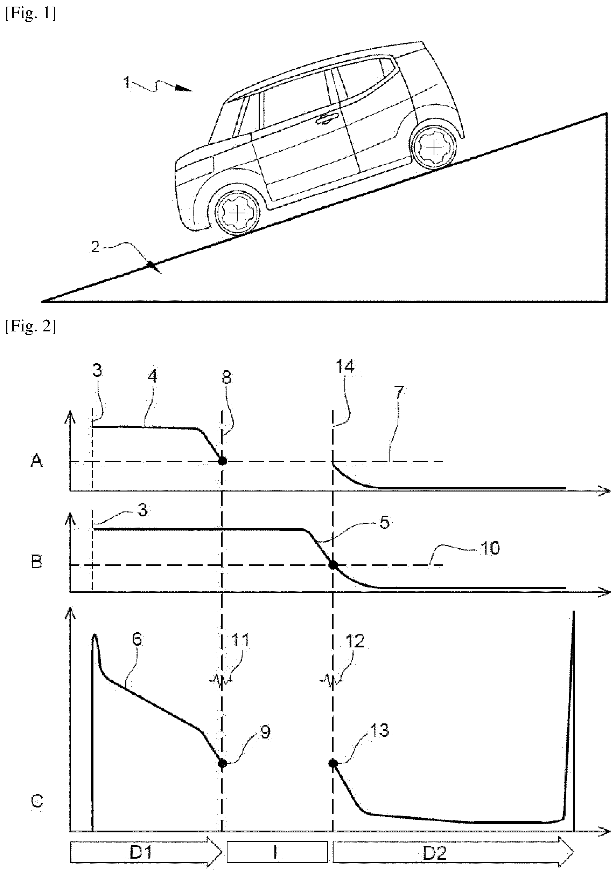

[Fig.1] la [Fig.1] est une représentation schématique d'un véhicule selon l'invention.
[Fig.2] la [Fig.2] est un ensemble de graphiques représentant une force de serrage d'un frein de parking du véhicule selon l'invention (A), une pression hydraulique exercée par un actionneur hydraulique d'un frein de service du véhicule selon l'invention (B) et une intensité d'un courant électrique alimentant un moteur électrique du frein de parking du véhicule selon l'invention (C) en fonction du temps selon un premier mode de réalisation de l'invention.

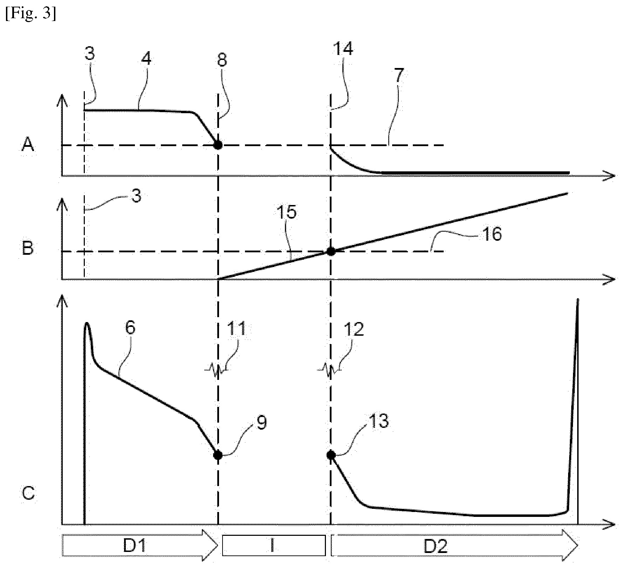

[Fig.3] la [Fig.3] est un ensemble de graphiques représentant une force de serrage d'un frein de parking du véhicule selon l'invention (A), une pression hydraulique exercée par un action actionneur hydraulique d'un frein de service du véhicule selon l'invention (B) et une intensité d'un courant électrique alimentant un moteur électrique du frein de parking du véhicule selon l'invention (C) en fonction du temps selon un deuxième mode de réalisation de l'invention.

### Description détaillée

Un véhicule automobile 1 selon l'invention est représenté à la [Fig.1]. Il est représenté stationné sur une route 2 qui présente une inclinaison par rapport à l'horizontale. Dans le mode de réalisation décrit, cette inclinaison est supérieure à 15%, par exemple comprise entre 15 % et 30 % (voir [Fig.1]). Selon d'autres modes de réalisation, l'inclinaison est comprise entre 5 % et 30 %, par exemple entre 10 % et 30 %. Le pourcentage d'inclinaison est classiquement utilisé dans le domaine routier pour décrire l'angle d'inclinaison d'une route. Par exemple, une route inclinée à 10 % correspond à une route pour laquelle le dénivelé est de 100 m par tronçon de 1 km, ou encore de 1 m tous les 10 m. L'homme du métier sait aisément convertir ce pourcentage d'inclinaison en un angle d'inclinaison. Selon encore un autre mode de réalisation, le véhicule est stationné sur une route à l'horizontale, c'est-à-dire avec une inclinaison de 0 %.

Dans le mode de réalisation décrit, le véhicule 1 est incliné vers l'avant de façon que la force de gravité a tendance à entrainer le véhicule vers l'avant. L'avant du véhicule 1 est donc situé à une altitude inférieure à celle de l'arrière du véhicule 1. Selon un autre mode de réalisation, le véhicule est incliné vers l'arrière de façon que la force de gravité a tendance à entrainer le véhicule vers l'arrière.

Le véhicule 1 comprend un frein de parking à commande électrique (non représenté) qui permet d'immobiliser les roues arrière du véhicule 1. Dans le présent mode de réalisation, ce frein de parking est un frein à tambour. Le frein de parking comprend de manière classique des moyens de friction formés par des garnitures portées par des mâchoires configurées pour coopérer avec un organe de freinage formés par un tambour par exemple tel que décrit dans le document WO 2015/101562A2. L'actionneur de ce frein de parking à commande électrique est donc un actionneur électrique qui commande un moteur électrique configuré pour mettre en mouvement les moyens de friction. Selon un autre mode de réalisation, le frein de parking est un frein à disque par exemple tel que décrit dans le document WO 2014/090763A2.

Le véhicule 1 comprend également un frein de service (non représenté) notamment sur les roues avant. Les moyens de friction et l'organe de freinage du frein de service sont confondus avec les moyens de friction et l'organe de freinage du frein de parking. Ces deux systèmes de freinage diffèrent par l'actionneur utilisé pour mettre en mouvement les moyens de friction. Comme indiqué précédemment, l'actionneur du frein de parking est un actionneur électrique. Dans le cas du frein de service, l'actionneur est un actionneur hydraulique qui, sous l'effet d'une pression exercée sur une pédale de frein par le conducteur, applique une pression sur les moyens de friction de manière à les déplacer en direction de l'organe de freinage.

Le véhicule 1 comprend une unité de contrôle électronique (non représentée) configurée pour mettre en œuvre le procédé selon l'invention. Cette unité de contrôle électronique est notamment capable de traiter des informations provenant des différents capteurs du véhicule afin de commander électroniquement des étapes du procédé.

Le principe général du procédé selon l'invention consiste à commander un desserrage du frein de parking en deux étapes séparées par une interruption du desserrage d'une durée liée à la réalisation d'une condition prédéterminée. Comme indiqué précédemment, un tel procédé permet de passer d'une grosse secousse ressentie par les occupants du véhicule à deux petites secousses, voire à une seule petite secousse.

Un premier mode de réalisation de l'invention est décrit à la [Fig.2]. La [Fig.2] comprend un ensemble de graphiques représentant une force de serrage du frein de parking (A), une pression hydraulique exercée par l'actionneur hydraulique du frein de service (B) et une intensité d'un courant électrique alimentant un moteur électrique du frein de parking (C) en fonction du temps. Les trois graphiques A, B, C sont alignés de sorte que leurs abscisses respectives, qui représentent le temps, coïncident entre elles. Ainsi, les différents évènements représentés sur ce graphique, lorsqu'ils partagent une même valeur d'abscisse, ont lieu au même moment.

Dans ce premier mode de réalisation, pendant une première étape D1 du procédé, le frein de parking est à l'origine serré de sorte qu'il immobilise le véhicule. La force de serrage du frein de parking est alors à sa valeur nominale d'immobilisation du véhicule, définie en fonction des caractéristiques du véhicule et des conditions environnementales. Dans le cas présent, cette force de serrage est d'au moins 1 000 N. Le conducteur qui souhaite faire quitter son stationnement au véhicule émet une commande 3 de desserrage du frein de parking. Cette commande peut consister, par exemple, à appuyer sur un bouton présent dans l'habitacle et prévu à cet effet. Au même moment, ou légèrement plus tôt, le conducteur appuie sur la pédale de frein de service afin de se prémunir contre tout déplacement non souhaité du véhicule une fois le frein de parking desserré. Cet appuie sur la pédale du frein de service provoque une augmentation de la pression hydraulique de l'actionneur hydraulique du frein de service, ce qui entraine en conséquence une augmentation de la pression exercée par le frein de service.

Dans le cas présent, comme cela est représenté sur le graphique B de la [Fig.2], le conducteur a préalablement appuyé sur la pédale du frein de service de sorte que la pression hydraulique des actionneurs hydrauliques est comprise entre 1,5 x 10⁶ Pa et 7,5 x 10⁶ Pa.

Comme cela est représenté sur le graphique C de la [Fig.2], la commande 3 de desserrage du frein de parking entraine la génération d'un courant électrique 6 dans le moteur électrique du frein de parking afin de mettre en marche celui-ci. Cette mise en marche entraine un déplacement des moyens de friction depuis une position dans laquelle ils coopèrent avec l'organe de freinage vers une position où ils sont à distance de l'organe de freinage.

Ainsi, au cours de cette première étape D1 de desserrage du frein de parking, sous l'effet du moteur électrique, la force de serrage 4 du frein de parking commence à diminuer (voir [Fig.2], graphique A). Dans le présent mode de réalisation, la force de serrage 4 du frein de parking est estimée à partir d'autres caractéristiques mesurées ou estimées du frein de parking, telles que l'intensité 6 et la tension d'alimentation du moteur électrique du frein de parking. Dans un autre mode de réalisation, la force de serrage 4 est mesurée par un capteur de force. Lorsque la force de serrage 4 estimée ou mesurée devient inférieure à un seuil de force prédéterminé 7, l'unité de contrôle électronique commande 8 une interruption du desserrage du frein de parking. Par exemple, l'unité de contrôle électronique commande un arrêt 9 de l'alimentation électrique du moteur électrique. De préférence, le seuil de force prédéterminé est choisi pour correspondre au moment où la force de serrage, appliquée par les moyens de friction qui sont en train de s'écarter de l'organe de freinage, a été diminuée au moins de moitié par rapport à sa valeur nominale. En effet, c'est à ce moment que le risque de ressentir une grosse secousse est le plus élevé. Dans d'autres modes de réalisation, d'autres valeurs de seuil de force prédéterminé sont choisies.

L'interruption du desserrage du frein de parking entraine éventuellement une première petite secousse 11.

À compter de l'interruption 9 de l'alimentation électrique, une phase d'interruption I commence. Durant cette phase, le conducteur, qui souhaite mettre en mouvement le véhicule, va retirer petit à petit son pied de la pédale de frein de service, faisant ainsi diminuer la pression hydraulique 5 appliquée par l'actionneur hydraulique du frein de service. La pression hydraulique est mesurée ou estimée selon des méthodes bien connues de l'homme du métier. Lorsqu'une pression hydraulique 5 de l'actionneur du frein de parking, devient inférieure à un seuil de pression prédéterminé 10, l'unité de contrôle électronique envoi une commande électrique 14 de reprise du desserrage du frein de parking. Dans le cas présent, ce seuil de pression est déterminé de manière à ce que la seconde petite secousse 12 soit concomitante à la mise en mouvement du véhicule. Ainsi, la seconde petite secousse 12 n'est pas ressentie par les occupants du véhicule qui n'ont donc ressentit, le cas échéant, que la première petite secousse 11.

Afin de reprendre le desserrage du frein de parking et de procéder à la deuxième étape D2 de ce desserrage, l'unité de contrôle électronique commande une reprise 13 de l'alimentation électrique du moteur électrique qui termine ainsi le déplacement des moyens de friction. La force de freinage du frein de parking diminue donc progressivement jusqu'à être nulle. Dans le même temps, le conducteur retire progressivement puis complétement son pied de la pédale du frein de service de manière à ce que la pression hydraulique de l'actionneur hydraulique du frein de service devienne elle aussi nulle.

Dans le présent mode de réalisation, le procédé est mis en œuvre uniquement lorsque des moyens de mesure ou d'estimation d'une inclinaison du véhicule détectent que le véhicule 1 présente une inclinaison supérieure à 5 % par rapport à une position de fonctionnement du véhicule à l'horizontale, et que le véhicule est incliné vers l'avant de façon que la force de gravité a tendance à entrainer le véhicule vers l'avant. En outre, le procédé est mis en œuvre uniquement lorsque des moyens de mesure ou d'estimation de la pression hydraulique exercée par l'actionneur hydraulique du frein de service du véhicule détectent que la pression hydraulique est comprise entre 1,5 x 10⁶ et 7,5 x10⁶ Pa. Ces informations sont transmises à l'unité de contrôle électronique qui les interprète comme une autorisation de mettre en œuvre le procédé selon l'invention et donc d'émettre les commandes mentionnées ci-dessus. Lorsque les moyens de mesure ou d'estimation d'une inclinaison du véhicule détectent que le véhicule présente une inclinaison inférieure à 5% ou une inclinaison supérieure à 5 % mais vers l'arrière, ou lorsque les moyens de mesures ou d'estimation de la pression hydraulique détectent que la pression hydraulique exercée par l'actionneur hydraulique n'est pas comprise entre 1,5 x10⁶ et 7,5 x 10⁶ Pa, cette information est traitée par l'unité de contrôle électronique qui ne met alors pas en œuvre le procédé selon l'invention en n'émettant pas de commande électrique de manière à interrompre le desserrage du frein de parking. Dans un autre mode de réalisation, l'unité de contrôle électronique ne prend pas en compte l'inclinaison du véhicule et/ou le fait que le véhicule soit incliné vers l'avant ou l'arrière et/ou la pression hydraulique exercée par l'actionneur hydraulique du frein de service et met en œuvre le procédé lors de chaque desserrage du frein de parking.

Un deuxième mode de réalisation du procédé selon l'invention est décrit à la [Fig.3]. Ce deuxième mode de réalisation diffère principalement du premier mode de réalisation en ce que la commande de la reprise 14 du desserrage du frein de parking ne dépend pas d'une pression hydraulique exercée par l'actionneur hydraulique du frein de service mais dépend d'une durée qui s'est écoulée depuis la commande 8 de desserrage du frein de parking. Ce deuxième mode de réalisation est présenté ci-dessous.

Dans une première étape D1 du procédé, le frein de parking est à l'origine serré de sorte qu'il immobilise le véhicule. La force de serrage 4 du frein de parking est alors à sa valeur nominale d'immobilisation du véhicule, définie en fonction des caractéristiques du véhicule et des conditions environnementales. Dans le cas présent, cette force de serrage est d'au moins 1 000 N. Le conducteur, qui souhaite faire quitter son stationnement au véhicule, émet une commande 3 de desserrage du frein de parking. Cette commande peut consister, par exemple, à appuyer sur un bouton présent dans l'habitacle et prévu à cet effet.

Comme cela est représenté sur le graphique C de la [Fig.3], la commande 3 de desserrage du frein de parking entraine la génération d'un courant électrique 6 dans le moteur électrique du frein de parking afin de mettre en marche celui-ci. Cette mise en marche entraine un déplacement des moyens de friction depuis une position dans laquelle ils coopèrent avec l'organe de freinage vers une position où ils sont à distance de l'organe de freinage.

Ainsi, au cours de cette première étape D1 de desserrage du frein de parking, la force de serrage 4 du frein de parking commence à diminuer sous l'effet du moteur électrique. Dans le présent mode de réalisation, la force de serrage 4 du frein de parking est estimée à partir d'autres caractéristiques mesurées ou estimées du frein de parking, telles que l'intensité et la tension d'alimentation du moteur électrique. Dans un autre mode de réalisation, la force de serrage 4 est mesurée par un capteur de force. Lorsque la force de serrage 4 estimée ou mesurée devient inférieure à un seuil de force prédéterminé 7, l'unité de contrôle électronique commande 8 une interruption du desserrage du frein de parking. Par exemple, l'unité de contrôle électronique commande une interruption 9 de l'alimentation électrique du moteur électrique. De préférence, le seuil de force prédéterminé est choisi pour correspondre au moment où la force appliquée par les moyens de friction sur l'organe de freinage a été diminuée au moins de moitié par rapport à sa valeur nominale. En effet, comme indiqué précédemment, c'est à ce moment que le risque de ressentir une grosse secousse est le plus élevé. Une première petite secousse 11 est éventuellement ressentie lors de l'interruption du desserrage du frein de parking.

À compter de l'interruption 9 de l'alimentation électrique, une phase d'interruption I commence. Dès que cette phase d'interruption I commence, des moyens de mesure du temps écoulé sont mis en œuvre. Ces moyens de mesure comprennent, par exemple, un minuteur électronique. L'unité de contrôle électronique est configurée pour commander 14 une reprise du desserrage du frein de parking lorsqu'une durée prédéterminée s'est écoulée depuis la commande 8 de l'interruption du desserrage du frein de parking. Dans le cas présent, cette durée prédéterminée est de 200 ms. Cette durée est suffisamment longue pour diviser la grosse secousse en deux petites secousses 11, 12, et suffisamment courte pour éviter que le desserrage du frein de parking ne soit trop long. Dans d'autres modes de réalisation, on prévoit que la durée prédéterminée est inférieure ou supérieure à 200 ms.

Afin de reprendre le desserrage du frein de parking et de procéder à la deuxième étape D2 de ce desserrage, l'unité de contrôle électronique commande 14 une reprise de l'alimentation électrique 13 du moteur électrique qui termine ainsi le déplacement des moyens de friction. Lors de la reprise du desserrage, une deuxième petite secousse 12 est éventuellement ressentie par les occupants du véhicule 1. La force de freinage 4 du frein de parking diminue ensuite progressivement jusqu'à être nulle.

Dans le présent mode de réalisation, le procédé est mis en œuvre uniquement lorsque des moyens de mesure ou d'estimation d'une inclinaison du véhicule détectent que le véhicule 1 présente une inclinaison supérieure à 5 % par rapport à une position de fonctionnement du véhicule à l'horizontale et que le véhicule est incliné vers l'avant de façon que la force de gravité a tendance à entrainer le véhicule vers l'avant. En outre, le procédé est mis en œuvre uniquement lorsque les moyens de mesure ou d'estimation de la pression hydraulique exercée par l'actionneur hydraulique du frein de service du véhicule détectent que la pression hydraulique est comprise entre 1,5 x 10⁶ et 7,5 x10⁶ Pa. Ces informations sont transmises à l'unité de contrôle électronique qui les interprète comme une autorisation de mettre en œuvre le procédé selon l'invention et donc d'émettre les commandes mentionnées ci-dessus. Lorsque les moyens de mesure ou d'estimation d'une inclinaison du véhicule détectent que le véhicule présente une inclinaison inférieure à 5% ou une inclinaison supérieure à 5 % mais vers l'arrière, ou lorsque les moyens de mesures ou d'estimation de la pression hydraulique détectent que la pression hydraulique exercée par l'actionneur hydraulique n'est pas comprise entre 1,5 x10⁶ et 7,5 x 10⁶ Pa, cette information est traitée par l'unité de contrôle électronique qui ne met alors pas en œuvre le procédé selon l'invention et n'émet donc pas de commande électrique de manière à interrompre puis reprendre la desserrage du frein de parking. Dans un autre mode de réalisation, l'unité de contrôle électronique ne prend pas en compte l'inclinaison du véhicule et/ou le fait que le véhicule soit incliné vers l'avant ou l'arrière et/ou la pression hydraulique exercée par l'actionneur hydraulique du frein de service et met en œuvre le procédé lors de chaque desserrage du frein de parking.

L'invention n'est pas limitée aux modes de réalisation présentés et d'autres modes de réalisation apparaîtront clairement à l'homme du métier.

Dans une alternative à l'invention présentée ci-dessus, on prévoit que l'unité de contrôle électronique commande au moins une modification du raidissement des amortisseurs du véhicule lors du desserrage du frein de parking afin de contrer le mouvement de repositionnement du châssis. Ainsi, la secousse ressentie par les occupants du véhicule est moins forte voire non perceptible.

### Liste de références

1 : véhicule automobile
2 : route
3 : commande de desserrage du frein de parking
4 : force de serrage du frein de parking
5 : pression hydraulique des actionneurs hydrauliques du frein de service
6 : intensité de l'alimentation électrique du moteur électrique du frein de parking
7 : seuil de force prédéterminé
8 : commande de l'interruption du desserrage du frein de parking
9 : interruption de l'alimentation électrique du moteur électrique
10 : seuil de pression prédéterminé
11 : première petite secousse
12 : deuxième petite secousse
13 : reprise de l'alimentation électrique du moteur électrique
14 : commande de la reprise du desserrage du frein de parking
15 : durée écoulée depuis l'interruption du desserrage du frein de parking
16 : durée prédéterminée

## Revendications

1. Procédé de commande électrique d'un frein de parking pour véhicule automobile (1), dans lequel on commande (3) un desserrage du frein de parking en deux étapes (D1, D2) séparées par une interruption (I) du desserrage d'une durée liée à la réalisation d'une condition prédéterminée, **caractérisé en ce que** l'interruption (I) du desserrage du frein de parking est commandée (8) lorsqu'une force de serrage du frein de parking (4) devient inférieure à un seuil de force prédéterminé (7).

2. Procédé selon la revendication 1, dans lequel on commande (14) une reprise du desserrage du frein de parking lorsqu'une pression hydraulique (5) exercée par un actionneur hydraulique d'un frein de service du véhicule devient inférieure à un seuil de pression prédéterminé (10).

3. Procédé selon la revendication 1, dans lequel on commande (14) une reprise du desserrage du frein de parking lorsqu'une durée prédéterminée (16) s'est écoulée depuis l'interruption du desserrage du frein de parking.

4. Procédé selon la revendication 3, dans lequel la durée prédéterminée (16) est de 200 ms.

5. Procédé selon l'une quelconque des revendications précédentes, dans lequel le procédé est mis en œuvre uniquement lorsque des moyens de mesure ou d'estimation d'une pression hydraulique exercée par un actionneur hydraulique d'un frein de service du véhicule détectent que la pression hydraulique est comprise entre 1,5 x 10⁶ et 7,5 x10⁶ Pa.

6. Procédé selon l'une quelconque des revendications précédentes, dans lequel le procédé est mis en œuvre uniquement lorsque des moyens de mesure ou d'estimation d'une inclinaison du véhicule (1) détectent que le véhicule (1) présente une inclinaison supérieure à 5 % par rapport à une position horizontale.

7. Procédé selon la revendication 6, dans lequel le procédé est mis en œuvre uniquement lorsque les moyens de mesure ou d'estimation d'une inclinaison du véhicule (1) détectent que le véhicule (1) est incliné vers l'avant de façon que la force de gravité a tendance à entrainer le véhicule vers l'avant.

8. Procédé selon l'une quelconque des revendications précédentes, dans lequel le frein de parking est un frein à tambour.

9. Véhicule automobile (1) comprenant une unité de contrôle électronique configurée pour mettre en œuvre le procédé selon l'une quelconque des revendications 1 à 8.

## Patentansprüche

1. Verfahren zur elektrischen Ansteuerung einer Feststellbremse für ein Kraftfahrzeug (1), wobei ein Ansteuern (3) zum Lösen der Feststellbremse in zwei Schritten (D1, D2) erfolgt, die durch eine Unterbrechung (I) des Lösens um eine mit der Erfüllung einer vorbestimmten Bedingung verbundenen Zeitdauer voneinander getrennt sind, **dadurch gekennzeichnet, dass** ein Ansteuern (8) zur Unterbrechung (I) des Lösens der Feststellbremse erfolgt, wenn eine Klemmkraft der Feststellbremse (4) unter einen vorbestimmten Kraftschwellenwert (7) fällt.

2. Verfahren nach Anspruch 1, wobei ein Ansteuern (14) zum Fortfahren mit dem Lösen der Feststellbremse erfolgt, wenn ein von einem hydraulischen Aktuator einer Betriebsbremse des Fahrzeugs ausgeübter hydraulischer Druck (5) unter einen vorbestimmten Druckschwellenwert (10) fällt.

3. Verfahren nach Anspruch 1, wobei das Ansteuern (14) zum Fortfahren mit dem Lösen der Feststellbremse erfolgt, wenn seit der Unterbrechung des Lösens der Feststellbremse eine vorbestimmte Zeitdauer (16) verstrichen ist.

4. Verfahren nach Anspruch 3, wobei die vorbestimmte Zeitdauer (16) 200 ms beträgt.

5. Verfahren nach einem der vorhergehenden Ansprüche, wobei das Verfahren nur dann durchgeführt wird, wenn Mittel zum Messen oder Schätzen eines von einem hydraulischen Aktuator einer Betriebsbremse des Fahrzeugs ausgeübten hydraulischen Drucks erfassen, dass der hydraulische Druck zwischen 1,5 x 10⁶ und 7,5 x 10⁶ Pa liegt.

6. Verfahren nach einem der vorhergehenden Ansprüche, wobei das Verfahren nur dann durchgeführt wird, wenn Mittel zum Messen oder Schätzen einer Neigung des Fahrzeugs (1) erfassen, dass das Fahrzeug (1) bezüglich einer horizontalen Position eine Neigung von über 5 % aufweist.

7. Verfahren nach Anspruch 6, wobei das Verfahren nur dann durchgeführt wird, wenn die Mittel zum Messen oder Schätzen einer Neigung des Fahrzeugs (1) erfassen, dass sich das Fahrzeug (1) derart nach vorn neigt, dass es wahrscheinlich ist, dass das Fahrzeug unter Wirkung der Schwerkraft nach vorn angetrieben wird.

8. Verfahren nach einem der vorhergehenden Ansprüche, wobei die Feststellbremse eine Trommelbremse ist.

9. Kraftfahrzeug (1), umfassend eine elektronische Steuereinheit, die dazu eingerichtet ist, das Verfahren nach einem der Ansprüche 1 bis 8 auszuführen.

## Claims

1. Method for electrically controlling a parking brake for a motor vehicle (1), wherein the release of the parking brake is controlled (3) in two steps (D1, D2) separated by an interruption (I) of the release for a duration related to the execution of a predetermined condition, **characterised in that** the interruption (I) of the release of the parking brake is controlled (8) when a clamping force of the parking brake (4) becomes less than a predetermined force threshold (7).

2. Method according to claim 1, wherein resumption of the release of the parking brake is controlled (14) when a hydraulic pressure (5) exerted by a hydraulic actuator of a service brake of the vehicle becomes less than a predetermined pressure threshold (10).

3. Method according to claim 1, wherein resumption of the release of the parking brake is controlled (14) when a predetermined duration (16) has elapsed since the interruption of the release of the parking brake.

4. Method according to claim 3, wherein the predetermined duration (16) is 200 ms.

5. Method according to any one of the preceding claims, wherein the method is implemented only when means for measuring or estimating a hydraulic pressure exerted by a hydraulic actuator of a service brake of the vehicle detect that the hydraulic pressure is between 1.5 x 10⁶ and 7.5 x10⁶ Pa.

6. Method according to any one of the preceding claims, wherein the method is implemented only when means for measuring or estimating an inclination of the vehicle (1) detect that the inclination of the vehicle (1) is greater than 5 % relative to a horizontal position.

7. Method according to claim 6, wherein the method is implemented only when the means for measuring or estimating an inclination of the vehicle (1) detect that the vehicle (1) is inclined forwards so that the force of gravity tends to move the vehicle forwards.

8. Method according to any one of the preceding claims, wherein the parking brake is a drum brake.

9. Motor vehicle (1) comprising an electronic control unit configured to implement the method according to any one of claims 1 to 8.
